# EUROPEAN PATENT APPLICATION

(11) **EP 2 009 051 A1**
(43) Date of publication of application: **31.12.2008**
(21) Application number: 07741578.4
(22) Date of filing: 13.04.2007
(51) Int. Cl.: C08L 15/00, B60C 1/00, B60C 15/06, B60C 17/00, C08K 5/00, C08L 61/04

(54) **RUBBER COMPOSITION AND RUN-FLAT TIRE USING THE SAME**

(30) Priority: 18.04.2006 JP 2006114321
(71) Applicant: Bridgestone Corporation, Tokyo 104-8340 (JP)
(72) Inventor: SHIRAISHI, Fumihiro, Kodaira-shi, Tokyo 187-8531 (JP)
(74) Representative: Whalley, Kevin
(86) International application number: PCT/JP2007/058142
(87) International publication number: WO 2007/123060

(57) **Abstract**

The present invention provides a rubber composition which comprises a rubber component comprising 50% by mass or more of an isocyanate-modified diene rubber having a content of vinyl bond of 20% by mass or greater in the diene component and, based on 100 parts by mass of the rubber component, 2 to 20 parts by mass of a phenolic resin and 0.5 to 5 parts by mass of a curing agent for the resin and a run flat tire in which the rubber composition is used for the side reinforcing layer and/or the bead filler. Durability under the run flat condition is improved without adverse effects on ride quality during driving under the normal condition.

## Description

### TECHNICAL FIELD

The present invention relates to a rubber composition providing improved durability under the run flat condition and a run flat tire using the rubber composition for the side reinforcing rubber and/or the bead filler.

### BACKGROUND ART

Heretofore, side reinforcing layers comprising a rubber composition or a composite of a rubber composition and fiber are disposed to increase rigidity of the side wall portions in tires and, in particular, in run flat tires (for example, refer to Patent Reference 1). During the driving under the condition such that the pressure at the inside (hereinafter, referred to as the internal pressure) of a tire is decreased due to puncture or the like, i.e., under the so-called run flat condition, deformation of the side reinforcing layer is increased as deformation of the side wall of the tire is increased, and generation of heat is increased. The temperature occasionally reaches 200°C or higher. The side reinforcing layer becomes in a condition beyond the limit of fracture, and failure of the tire takes place.
As the means to increase the period of time before the failure of the tire takes place, the volume of the rubber may be increased, for example, by increasing the maximum thickness of the disposed side reinforcing layer or bead filler. However, the increase in the volume of the rubber causes undesirable phenomena in that the ride quality during driving under the normal condition deteriorates, that the weight of the tire is increased, and that the level of noise is increased.
When the volume of the disposed side reinforcing layer or bead filler is decreased to overcome the above problem, for example, to prevent deterioration in the ride quality, the tire cannot sufficiently support the load in the run flat condition, and deformation of the side wall portion of the tire under the run flat condition is increased to a great degree. Generation of heat in the rubber composition is increased and, as the result, the failure of the tire takes place early.
Modification of the rubber composition used for the side reinforcing layer or the bead filler is also conducted. For example, when the modulus of the rubber composition is decreased, the tire cannot sufficiently support the load under the run flat condition, and deformation of the side wall portion of the tire under the run flat condition is extremely increased. Generation of heat in the rubber composition is increased and, as the result, the failure of the tire takes place early as described above.
To overcome the above problem, it is proposed in Patent Reference 2 that rubber compositions comprising various modified copolymers of conjugated dienes and aromatic vinyl compounds and agents for improving heat resistance are used for the side reinforcing layer and the bead filler.
In Patent Reference 3, it is proposed that a rubber composition comprising a specific conjugated diene-based copolymer and a phenolic resin is used for the side reinforcing layer and the bead filler.
The above methods have the object of increasing the modulus of the rubber composition used for the side reinforcing layer and the bead filler and suppressing the decrease in the modulus at high temperatures, and a great degree of improvement in the durability under the run flat condition has been achieved.
However, further improvement in the durability under the run flat condition is required as the performances of automobiles and, in particular, passenger cars are making progress.

[Patent Reference 1] Japanese Patent Application Laid-Open No. Heisei 11(1999)-310019
[Patent Reference 2] A pamphlet of WO 02/02356
[Patent Reference 3] Japanese Patent Application Laid-Open No. 2004-74960

### DISCLOSURE OF THE INVENTION

Under the above circumstances, the present invention has an object of providing a run flat tire providing improved durability under the run flat condition without adverse effects on the ride quality during driving under the normal condition.

As the result of intensive studies by the present inventor to achieve the above object, it was found that the above object could be achieved by using a rubber composition which comprised a rubber component comprising an isocyanate-modified diene rubber in a specific content, a phenolic resin and a curing agent for the resin in respective specific amounts for at least one of the side reinforcing layer and the bead filler. The present invention has been completed based on the knowledge.
The present invention provides a rubber composition which comprises a rubber component comprising 50% by mass or more of an isocyanate-modified diene rubber having a content of vinyl bond of 20% by mass or greater in a diene component and, based on 100 parts by mass of the rubber component, 2 to 20 parts by mass of a phenolic resin and 0.5 to 5 parts by mass of a curing agent for the resin, and a run flat tire which comprises a carcass layer which is disposed extending between a pair of bead cores in a toroidal shape and comprises at least one radial carcass ply having both end portions wound up around each bead core from inside to outside of the tire, side rubber layers which are disposed in side areas of the carcass layer at outside in an axial direction of the tire and form outer side portions, a tread rubber layer which is disposed in a crown area of the carcass layer at outside in a radial direction of the tire and forms a portion contacting a road surface, a belt layer which is disposed between the tread rubber layer and the crown area of the carcass layer and forms a reinforcing belt, an inner liner which is disposed on entire inner face of the carcass layer and forms an airtight film, bead fillers which are disposed between a main portion of the carcass layer disposed extending from one of the bead cores to an other of the bead cores and a wound up portion of the carcass layer wound up around the bead cores, and at least one side reinforcing layer which is disposed extending from a side portion of the bead filler to a shoulder zone in side areas of the carcass layer between the carcass layer and the inner liner and has an approximately crescent shape of a section along an axis of rotation of the tire, wherein the rubber composition described above is used for the side reinforcing layer and/or the bead filler.

### BRIEF DESCRIPTION OF THE DRAWINGS

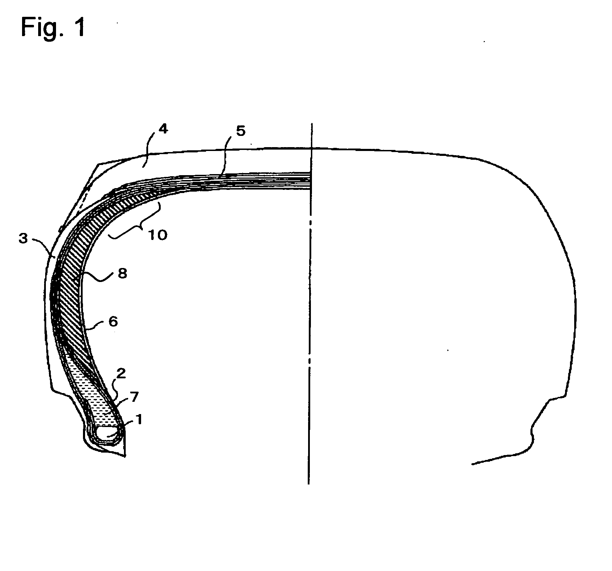

Figure 1 shows a schematic diagram exhibiting a sectional view of an embodiment of the run flat tire of the present invention.

In the Figure, reference numerals mean as follows:
- 1 and 1':: Bead cores
- 2:: A carcass layer
- 3:: A side rubber layer
- 4:: A tread rubber layer
- 5:: A belt layer
- 6:: An inner liner
- 7:: A bead filler
- 8:: A side reinforcing layer
- 10:: A shoulder zone

### THE MOST PREFERRED EMBODIMENT TO CARRY OUT THE INVENTION

As the first aspect, the present invention provides a rubber composition which comprises a rubber component comprising 50% by mass or more of an isocyanate-modified diene rubber having a content of vinyl bond of 20% by mass or greater in the diene component and, based on 100 parts by mass of the rubber component, 2 to 20 parts by mass of a phenol-based resin and 0.5 to 5 parts by mass of a curing agent for the resin.
It is required that the content of the vinyl bond in the diene component of the isocyanate-modified diene rubber be 20% by mass or greater. When the content of the vinyl bond is smaller than 20%, the decrease in the dynamic storage modulus E' due to scission of the sulfur crosslinking dominates at high temperatures of 150°C or higher, and the effect of suppressing the decrease in the modulus with the elevation of the temperature cannot be sufficiently expected. From this standpoint, it is preferable that the content of the vinyl bond is 25% by mass or greater, more preferably 30% by mass or greater, still more preferably 35% by mass or greater and most preferably 40 to 60% by mass.
In the present invention, the content of the vinyl bond is expressed in terms of "% by mass" in consideration of the possibility that two or more diene components having different molecular weights are present.

It is preferable that the isocyanate-modified diene rubber in the present invention is an isocyanate-modified conjugated diene polymer and/or an isocyanate-modified conjugated diene-aromatic vinyl compound copolymer and more preferably an isocyanate-modified conjugated diene-aromatic vinyl compound copolymer.
Examples of the conjugated diene monomer include 1,3-butadiene, 1,3-pentadiene and 1,3-hexadiene. Among these monomers, 1,3-butadiene is preferable. Examples of the aromatic vinyl monomer used for the copolymerization with the conjugated diene monomer include styrene, α-methylstyrene, 1-vinylnaphthalene, 3-vinyltoluene, ethylvinylbenzene, divinylbenzene, 4-cyclohexylstyrene and 2,4,6-trimethylstyrene. Among these monomers, styrene is preferable.
As described above, the isocyanate-modified styrene-butadiene copolymer rubber is most preferable as the isocyanate-modified diene rubber.

In the rubber composition of the present invention, it is necessary that the rubber component comprise 50% by mass or more of the isocyanate-modified diene rubber. When the content is smaller than 50% by mass, the decrease in the modulus of the rubber due to the elevation of the temperature cannot be suppressed, occasionally. Moreover, when the content is smaller than 50% by mass, the decrease in the dynamic modulus and the increase in the loss tangent, tan δ, due to the elevation of the temperature are not suppressed, occasionally. From this standpoint, it is preferable that the rubber component comprises 60% by mass or more of the isocyanate-modified diene rubber.

In the rubber composition of the present invention, other rubber components mixed with the isocyanate-modified diene rubber are not particularly limited. Examples of the other rubber component include natural rubber, polyisoprene synthetic rubber (IR), cis-1,4-polybutadiene rubber (BR), styrene-butadiene rubber (SBR), acrylonitrile-butadiene rubber (NBR), chloroprene rubber (CR) and butyl rubbers (IIR) such as halogenated butyl rubber. The rubber may be used in combination of two or more.

As the modifier used for the isocyanate-modified diene rubber used in the present invention, isocyanate compounds such as diphenylmethane diisocyanate (MDI), polymeric diphenylmethane diisocyanate (polymeric MDI), 2,4-tolylene diisocyanate, 2,6-tolylene diisocyanate, xylylene diisocyanate, naphthylene diisocyanate, biphenylene diisocyanate, diphenyl ether diisocyanate, tolidine diisocyanate, hexamethylene diisocyanate and isophorone diisocyanate are preferable, and diphenylmethane diisocyanate (MDI) and/or polymeric diphenylmethane diisocyanate (polymeric MDI) are more preferable from the standpoint of the performance and the cost.
In practical applications, crude MDI (C-MDI) which is a mixture of MDI and polymeric MDI is preferable.

Typical examples of the polymeric MDI include compounds represented by the following general formulae (I), (II), (III) and (IV):

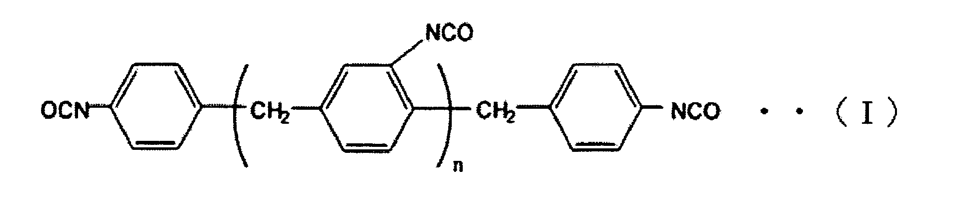

in the above formula, n representing an integer of 1 to 5,

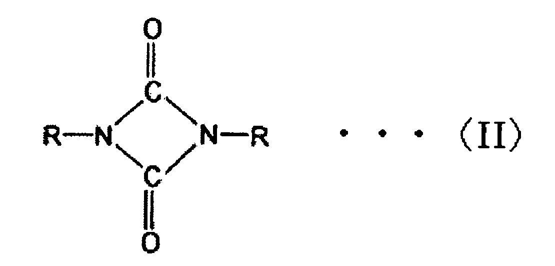

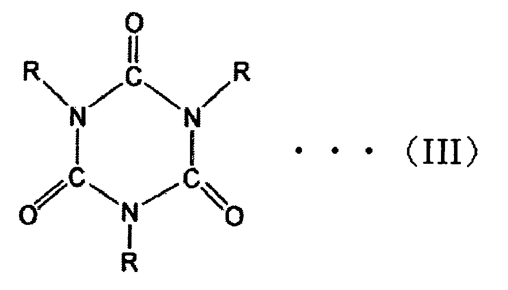

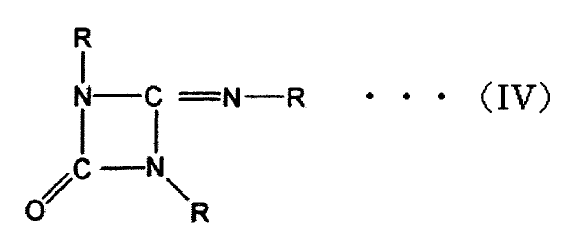

in the above formulae (II), (III) and (IV), R representing a group expressed by the following formula:

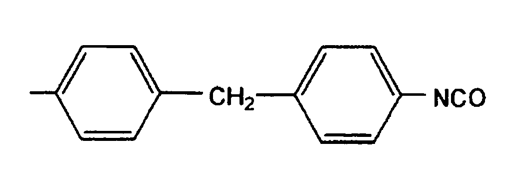

The above general formula (II) represents a urethidinedione which is a dimer of MDI. The above general formula (III) represents an isocyanurate which is a trimer of MDI. The above general formula (IV) represents an urethoneimine.
Examples of C-MDI include a mixture containing about 40% by mass of MDI, about 20% by mass of the polymeric MDI represented by general formula (I) in which n=1, about 10% by mass of the polymeric MDI represented by general formula (I) in which n=2, about 30% by mass of the polymeric MDI represented by general formula (I) in which n is 3 or more, dimers of MDI, trimers of MDI and urethoneimines.

It is necessary for the rubber composition in the present invention that the rubber component comprise 2 to 20 parts by mass of a phenolic resin and 0.5 to 5 parts by mass of a curing agent for the resin based on 100 parts by mass of the rubber component described above. When the content of the phenolic resin is smaller than 2 parts by mass, the desired modulus is not obtained. When the content of the phenolic resin exceeds 20 parts by mass, the loss tangent (tan δ) of the rubber composition is increased, and the durability under the run flat condition is decreased, occasionally. When the content of the curing agent for the resin is smaller than 0.5 parts by mass, the phenolic resin cannot be cured effectively. When the content of the curing agent for the resin exceeds 5 parts by mass, the rubber composition is excessively cured, and the fatigue resistance is decreased. The relative amounts by mass of the phenolic resin and the curing agent for the resin may be suitably selected. It is preferable that the ratio of the amount by mass of the phenolic resin to the amount by mass of the curing agent for the resin is 90/10 to 50/50.

Examples of the phenolic resin include phenol-formaldehyde resins, resorcinol-formaldehyde resins and cresol-formaldehyde resins. Phenol-formaldehyde resins are preferable.
As the phenolic resin, 100% phenolic resins, phenolic resins modified with natural resins and phenolic resins modified with oils can be used.
As the phenol-formaldehyde resin, novolak resins which are two-step resins cured by using a curing agent for the resin is preferable.
Examples of the curing agent for the resin include hexamethylenetetramine and hexamethoxymethylmelamine. A suitable combination of the curing agents may be used as desired. A plurality of the phenolic resins and a plurality of the curing agents may be selected. A resin in which the curing agent for the resin has been added in advance may be used.

The rubber composition of the present invention comprising the isocyanate-modified diene rubber may suitably comprise various compounding ingredients conventionally used in the rubber industry in combination with the components described above. Examples of the compounding ingredients include vulcanizing agents such as sulfur and peroxides, vulcanization accelerators, antioxidants, softeners, fillers for reinforcement such as carbon black and silica and inorganic fillers. The rubber composition of the present invention may be a composite comprising particles of various materials, fibers and fabrics.
The rubber composition of the present invention can be prepared by mixing the components using a conventional mixer such as a Banbury mixer, an internal mixer and rolls.

The rubber composition of the present invention provides the great effect of suppressing the decrease in the modulus of the rubber composition with the elevation of the temperature with the isocyanate-modified diene rubber in which the content of the vinyl bond in the diene component is 25% by mass or greater, and the durability under the run flat condition can be improved by suppressing the deformation of the side portion of the tire.
The use of the phenolic resin and the curing agent for the resin in the rubber composition of the present invention elevates the modulus at a great deformation (the modulus at the 100% elongation) necessary for supporting the load during driving under the run flat condition and the use can the durability under the run flat condition can be improved by suppressing the initial deformation of the tire side portion of the tire. Further, the use of the phenolic resin in the rubber composition has little effect on the ride quality during driving under the normal condition since the increase in the dynamic modulus E' is small although the modulus at the 100% elongation is increased.

The second aspect of the present invention will be described with reference to a figure. Figure 1 shows a schematic diagram exhibiting a sectional view of an embodiment of the run flat tire of the present invention.
In Figure 1, the run flat tire of the present invention comprises a carcass layer 2 which is disposed extending between a pair of bead cores 1 and 1' in a toroidal shape and comprises at least one radial carcass ply having both end portions wound up around each bead core 1 or 1' from the inside to the outside of the tire, side rubber layers 3 which are disposed in the outside of the side areas of the carcass layer 2 in the axial direction of the tire and form outer side portions of the tire, a tread rubber layer 4 which is disposed in the outside of the crown area of the carcass layer 2 in the radial direction of the tire and forms a portion contacting the road surface, a belt layer 5 which is disposed between the tread rubber layer 4 and the crown area of the carcass layer 2 and forms a reinforcing belt, an inner liner 6 which is disposed on the entire inner face of the carcass layer 2 and forms an airtight film, bead fillers 7 which are disposed between the main portion of the carcass layer 2 disposed extending from one of the bead cores 1 to the other of the bead cores 1' and the wound up portion of the carcass layer wound up around the bead core 1, and at least one side reinforcing layer 8 which is disposed extending from the side portion of the bead filler 7 to a shoulder zone 10 in the side areas of the carcass between the carcass layer 2 and the inner liner 6 and has an approximately crescent shape of the section along the axis of rotation of the tire, wherein the rubber composition of the present invention is used for the side reinforcing layer 8 and/or the bead filler 7. The run flat tire of the present invention exhibits the effects described above due to the above construction.
The run flat tire of the present invention can be produced in accordance with the conventional process.

### EXAMPLES

The present invention will be described more specifically with reference to examples in the following. However, the present invention is not limited to the examples.
The modulus at the 100% elongation (MPa) and the dynamic storage modulus E' (MPa) of a rubber composition and the durability under the run flat condition and the ride quality of a tire used for the test were measured in accordance with the following methods.

### (1) Modulus at 100% elongation (MPa)

In accordance with the method of Japanese Industrial Standard K6251:2004, the tensile modulus at the 100% elongation was obtained at the temperature of the measurement of 25°C using a slab sheet having a thickness of 2 mm which was obtained by vulcanizing a rubber composition at 160°C for 12 minutes.

### (2) Dynamic storage modulus E' (MPa)

A rubber composition was vulcanized at 160°C for 12 minutes, and a sheet having a width of 5 mm and a length of 40 mm was cut out from the obtained slab sheet having a thickness of 2 mm and used as the sample. Using the obtained sample, the measurement was conducted by a spectrometer manufactured by UESHIMA SEISAKUSHO Co., Ltd. under the condition of a distance between chucks of 10 mm, an initial strain of 200 µm, a dynamic strain of 1%, a frequency of 52 Hz and a temperature of the measurement of 25°C.

### (3) Durability under the run flat condition

A sample tire was mounted to a rim under the ordinary pressure. After an internal pressure of 230 kPa was applied, the tire was left standing in a room at a temperature of 38°C for 24 hours. Then, the internal pressure was adjusted at the atmospheric pressure by removing the core of the valve, and the driving test of the tire on a drum was conducted under the condition of a load of 4.17 kN (425 kg), a speed of 89 km/hour and a temperature in the room of 38°C. The distance driven before the failure of the tire took place was measured and expressed as an index using the distance driven in Comparative Example 2 as the reference, which was set at 100. The greater the index, the better the durability under the run flat condition.

### (4) Ride quality

A test tire was mounted to a passenger car, and the feeling test on the ride quality was conducted by two professional drivers. The result of the evaluation by each driver was expressed as a number from 1 to 10 in accordance with the 10 point evaluation, and the average of the values obtained by the two drivers was obtained. The greater the value, the better the ride quality.

### Preparation Example 1 Preparation of a C-MDI-modified SBR (the content of the vinyl bond: 15% by mass)

Into a pressure-resistant 8 liter reactor which was equipped with a jacket for control of the temperature and had been dried and purged with nitrogen, 3 kg of cyclohexane, 400 g of butadiene monomer, 100 g of styrene and 0.15 mmole of ditetrahydrofurylpropane (DTHFP) were injected. After 5.5 mmole of n-butyllithium (BuLi) was added to the resultant mixture, the polymerization was conducted for 1 hour at an initial temperature of 40°C. The polymerization was conducted under elevation of the temperature, and the temperature of the jacket was controlled so that the final temperature did not exceed 75°C. In the polymerization system, no precipitates were found at all from the start to the end of the polymerization, and the system was uniform and transparent. The conversion of the polymerization was about 100%.
To the above polymerization system, 5 ml of C-MDI (1 mole/liter, a cyclohexane solution) was added, and the reaction of modification was conducted for 30 minutes. Then, the reaction was terminated by adding 0.5 ml of a 5% isopropanol solution of 2,6-di-t-butyl-p-cresol (BHT) to the polymerization system, and the obtained polymer was dried in accordance with the conventional method to obtain a C-MDI-modified SBR. The content of the vinyl bond obtained in accordance with the infrared method (the Morero's method) was 15% by mass, and the content of styrene was 20% by mass.
As C-MDI, a product manufactured by NIPPON POLYURETHANE KOGYO Co., Ltd. with the trade name of "MILLIONATE MR400" was used.

### Preparation Example 2 Preparation of a C-MDI-modified SBR (the content of the vinyl bond: 25% by mass)

The preparation was conducted in accordance with the same procedures as those conducted in Preparation Example 1 except that the amount of the injected ditetrahydrofurylpropane (DTHFP) was 0.70 mmole. The content of the vinyl bond in accordance with the infrared method (the Morero's method) was 25% by mass, and the content of styrene was 20% by mass.

### Preparation Example 3 Preparation of a C-MDI-modified SBR (the content of the vinyl bond: 40% by mass)

The preparation was conducted in accordance with the same procedures as those conducted in Preparation Example 1 except that the amount of the injected ditetrahydrofurylpropane (DTHFP) was 1.65 mmole. The content of the vinyl bond in accordance with the infrared method (the Morero's method) was 40% by mass, and the content of styrene was 20% by mass.

### Preparation Example 4 Preparation of a C-MDI-modified SBR (the content of the vinyl bond: 60% by mass)

The preparation was conducted in accordance with the same procedures as those conducted in Preparation Example 1 except that the amount of the injected ditetrahydrofurylpropane (DTHFP) was 2.95 mmole. The content of the vinyl bond in accordance with the infrared method (the Morero's method) was 60% by mass, and the content of styrene was 20% by mass.

### Preparation Example 5 Preparation of a SnCl₄-modified SBR (the content of the vinyl bond: 25% by mass)

The preparation was conducted in accordance with the same procedures as those conducted in Preparation Example 2 except that 0.8 ml of SnCl₄ (1 mole/liter; a cyclohexane solution) was used as the agent for the end modification in place of 5 ml of C-MDI (1 mole/liter; a cyclohexane solution). The content of the vinyl bond in accordance with the infrared method (the Morero's method) was 25% by mass, and the content of styrene was 20% by mass.

### Examples 1 to 7 and Comparative Examples 1 to 7

Fourteen types of rubber compositions were prepared in accordance with formulations shown in Table 1. Using the prepared 14 types of rubber compositions, the modulus at the 100% elongation (MPa) and the dynamic storage modulus E' (MPa) were measured. The results are shown in Table 1.

**Table 1-1**

| Example | 1 | 2 | 3 | 4 | 5 | 6 | 7 |
|---|---|---|---|---|---|---|---|
| Comparative Example | - | - | - | - | - | - | - |
| Formulation | | | | | | | |
| natural rubber | 30 | 30 | 30 | 30 | 30 | 30 | 30 |
| C-MDI modified SBR (Vi=15%) ¹⁾ | - | - | - | - | - | - | - |
| C-MDI modified SBR (Vi=25%) ²⁾ | 70 | 70 | 70 | 70 | 70 | - | - |
| C-MDI modified SBR (Vi=40%) ³⁾ | - | - | - | - | - | 70 | - |
| C-MDI modified SBR (Vi=60%) ⁴⁾ | - | - | - | - | - | - | 70 |
| SiCl₄-modified SBR (Vi=25%) ⁵⁾ | - | - | - | - | - | - | - |
| unmodified SBR (Vi=60%) ⁶⁾ | - | - | - | - | - | - | - |
| carbon black N550 ⁷⁾ | 50 | 50 | 50 | 50 | 50 | 50 | 50 |
| Phenolic resin ⁸⁾ | 3.0 | 6.0 | 10.0 | 3.0 | 6.0 | 3.0 | 3.0 |
| curing agent ⁹⁾ | 0.6 | 1.2 | 2.0 | 0.6 | 1.2 | 0.6 | 0.6 |
| process oil | 3.0 | 3.0 | 3.0 | 3.0 | 3.0 | 3.0 | 3.0 |
| zinc oxide | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant 6C ¹⁰⁾ | 1.0 | 1.0 | 1.0 | 1.0 | 1.0 | 1.0 | 1.0 |
| vulcanization accelerator CZ ¹¹⁾ | - | - | - | 4.0 | 4.0 | - | - |
| vulcanization accelerator DZ ¹²⁾ | 3.0 | 3.0 | 3.0 | - | - | 3.0 | 3.0 |
| vulcanization accelerator TOT ¹³⁾ | 1.0 | 1.0 | 1.0 | - | - | 1.0 | 1.0 |
| sulfur | 5.0 | 5.0 | 5.0 | 5.0 | 5.0 | 5.0 | 5.0 |
| Result of evaluation | | | | | | | |
| modulus at 100% elongation (MPa) | 8.2 | 9.5 | 10.6 | 8.5 | 9.6 | 8.4 | 8.5 |
| dynamic storage modulus (MPa) | 8.1 | 8.5 | 8.8 | 8.9 | 9.3 | 8.3 | 8.2 |
| durability under run flat condition | 110 | 115 | 125 | 110 | 120 | 125 | 145 |
| ride quality | 7.0 | 7.0 | 6.5 | 6.5 | 6.0 | 7.0 | 7.0 |

**Table 1-2**

| Example | - | - | - | - | - | - | - |
|---|---|---|---|---|---|---|---|
| Comparative Example | 1 | 2 | 3 | 4 | 5 | 6 | 7 |
| Formulation | | | | | | | |
| natural rubber | 30 | 30 | 30 | 30 | 30 | 30 | 30 |
| C-MDI modified SBR (Vi=15%) ¹⁾ | 70 | - | - | - | - | - | - |
| C-MDI modified SBR (Vi=25%) ²⁾ | - | 70 | 70 | - | - | - | - |
| C-MDI modified SBR (Vi=40%) ³⁾ | - | - | - | - | - | - | - |
| C-MDI modified SBR (Vi=60%) ⁴⁾ | - | - | - | - | - | - | - |
| SiCl₄-modified SBR (Vi=25%) ⁵⁾ | - | - | - | 70 | 70 | - | - |
| unmodified SBR (Vi=60%) ⁶⁾ | - | - | - | - | - | 70 | 70 |
| carbon black N550 ⁷⁾ | 50 | 50 | 50 | 50 | 50 | 50 | 50 |
| Phenolic resin ⁸⁾ | 3.0 | - | 3.0 | - | 3.0 | - | 3.0 |
| curing agent ⁹⁾ | 0.6 | - | - | - | 0.6 | - | 0.6 |
| process oil | 3.0 | 3.0 | 3.0 | 3.0 | 3.0 | 3.0 | 3.0 |
| zinc oxide | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant 6C ¹⁰⁾ | 1.0 | 1.0 | 1.0 | 1.0 | 1.0 | 1.0 | 1.0 |
| vulcanization accelerator CZ ¹¹⁾ | - | - | - | - | - | - | - |
| vulcanization accelerator DZ ¹²⁾ | 3.0 | 3.0 | 3.0 | 3.0 | 3.0 | 3.0 | 3.0 |
| vulcanization accelerator TOT ¹³⁾ | 1.0 | 1.0 | 1.0 | 1.0 | 1.0 | 1.0 | 1.0 |
| sulfur | 5.0 | 5.0 | 5.0 | 5.0 | 5.0 | 5.0 | 5.0 |
| Result of evaluation | | | | | | | |
| modulus at 100% elongation (MPa) | 8.0 | 7.0 | 7.2 | 6.8 | 7.9 | 6.9 | 8.1 |
| dynamic storage modulus (MPa) | 7.8 | 7.9 | 8.1 | 7.4 | 8.0 | 7.4 | 7.9 |
| durability under run flat condition | 95 | 100 | 100 | 80 | 90 | 75 | 85 |
| ride quality | 6.5 | 7.0 | 7.0 | 7.0 | 6.5 | 7.0 | 6.5 |

| | | | | | | | |
|---|---|---|---|---|---|---|---|
| Notes: 1) The isocyanate-modified styrene-butadiene copolymer rubber prepared in Preparation Example 1 2) The isocyanate-modified styrene-butadiene copolymer rubber prepared in Preparation Example 2 3) The isocyanate-modified styrene-butadiene copolymer rubber prepared in Preparation Example 3 4) The isocyanate-modified styrene-butadiene copolymer rubber prepared in Preparation Example 4 5) The SnCl₄-modified styrene-butadiene copolymer rubber prepared in Preparation Example 5 6) The styrene-butadiene copolymer rubber before modification in Preparation Example 4 7) FEF; manufactured by TOKAI CARBON Co., Ltd.; the trade name: "SIEST SO"; the specific surface area by nitrogen adsorption (N₂SA): 42 m²/g; the dibutyl phthalate absorption: 115 cm³/100 g 8) A phenol-formaldehyde resin (the novolak type); manufactured by SUMITOMO BAKELITE Co., Ltd. 9) Hexamethylenetetramine; manufactured by OUCHI SHINKO KAGAKU Co., Ltd. 10) N-(1,3-Dimethylbutyl)-N'-phenyl-p-phenylenediamine; manufactured by OUCHI SHINKO KAGAKU Co., Ltd.; the trade name: "NOCRAC 6C" 11) N-Cyclohexyl-2-benzothiazylsulfenamide; manufactured by OUCHI SHINKO KAGAKU Co., Ltd.; the trade name: "NOCCELOR CZ" 12) N,N'-Dicyclohexyl-2-benzothiazylsulfenamide; manufactured by OUCHI SHINKO KAGAKU Co., Ltd.; the trade name: "NOCCELOR DZ" 13) tetrakis(2-Ethylhexyl)thiuram disulfide; manufactured by OUCHI SHINKO KAGAKU Co., Ltd.; the trade name: "NOCCELOR TOT-N" | | | | | | | |

Using the 14 types of rubber compositions shown in Table 1 for the side reinforcing layer 8 and the bead filler 7 shown in Figure 1, 14 run flat tires for passenger cars having a size of 215/45ZR17 were prepared in accordance with the conventional process. Using the prepared 14 types of tires, the durability under the run flat condition and the ride quality were evaluated. The results are shown in Table 1.

As shown in the results in Table 1, when the rubber compositions of the present invention was used for the side reinforcing layer and/or the bead filler, the durability under the run flat condition of the tires using the rubber compositions was remarkably improved without adverse effects on the ride quality during the driving under the normal condition.

### INDUSTRIAL APPLICABILITY

The rubber composition of the present invention and the run flat tire of the present invention using the rubber composition for the side reinforcing layer and/or the bead filler can be advantageously used for vehicles such as passenger cars, light passenger cars, light trucks, buslets, light trucks, large trucks and large buses and, in particular for passenger cars.

## Claims

1. A rubber composition which comprises a rubber component comprising 50% by mass or more of an isocyanate-modified diene rubber having a content of vinyl bond of 20% by mass or greater in a diene component and, based on 100 parts by mass of the rubber component, 2 to 20 parts by mass of a phenolic resin and 0.5 to 5 parts by mass of a curing agent for the resin.

2. A rubber composition according to Claim 1, wherein a modifier used for the isocyanate-modified diene rubber is diphenylmethane diisocyanate and/or a polymeric diphenylmethane diisocyanate represented by one of following general formulae (I) to (IV): 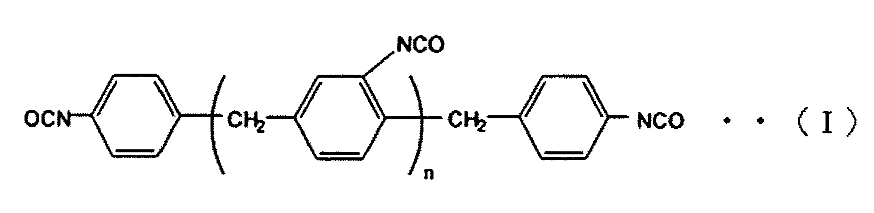 n in the above formula representing an integer of 1 to 5, 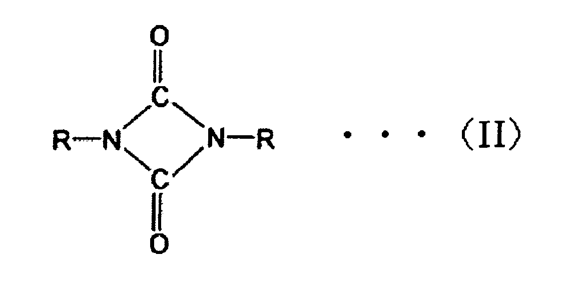 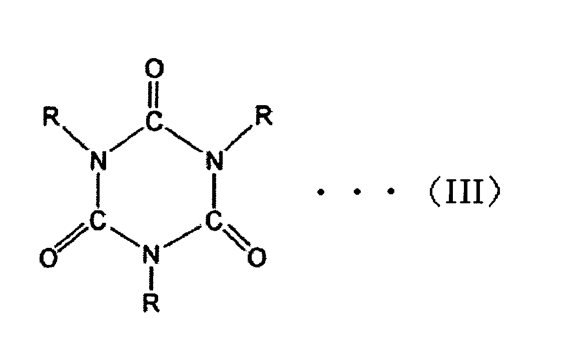 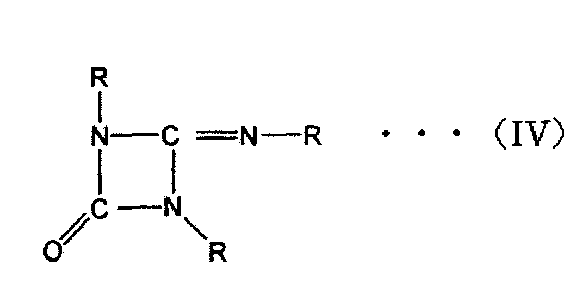 R in general formulae (II), (III) and (IV) representing a group having a structure expressed by following formula:

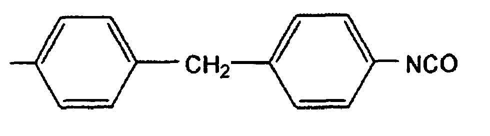

3. A rubber component according to any one of Claims 1 and 2, wherein the isocyanate-modified diene rubber is an isocyanate-modified styrene-butadiene copolymer rubber.

4. A run flat tire which comprises a carcass layer which is disposed extending between a pair of bead cores in a toroidal shape and comprises at least one radial carcass ply having both end portions wound up around each bead core from the inside to the outside of the tire, side rubber layers which are disposed in the outside of the side areas of the carcass layer in the axial direction of the tire and form outer side portions of the tire, a tread rubber layer which is disposed in the outside of the crown area of the carcass layer in the radial direction of the tire and forms a portion contacting the road surface, a belt layer which is disposed between the tread rubber layer and the crown area of the carcass layer and forms a reinforcing belt, an inner liner which is disposed on the entire inner face of the carcass layer and forms an airtight film, bead fillers which are disposed between the main portion of the carcass layer disposed extending from one of the bead cores to the other of the bead cores and the wound up portion of the carcass layer wound up around one of the bead cores, and at least one side reinforcing layer which is disposed extending from the side portion of the bead filler to a shoulder zone in the side areas of the carcass between the carcass layer and the inner liner and has an approximately crescent shape of the section along the axis of rotation of the tire, wherein the rubber composition described in any one of Claims 1 to 3 is used for the side reinforcing layer and/or the bead filler.

5. A run flat tire according to Claim 4, which is a run-flat tire for passenger cars.
